# EUROPEAN PATENT SPECIFICATION

(11) **EP 1 772 192 B1**
(45) Date of publication and mention of the grant of the patent: **07.01.2015**
(21) Application number: 06121616.4
(22) Date of filing: 02.10.2006
(51) Int. Cl.: B01L 9/00, G01N 35/10, B01J 19/00

(54) **Biochemical processing apparatus provided with liquid transport mechanism**
Biochemische Verarbeitungsvorrichtung mit einem Flüssigkeitstransportmechanismus
Appareil de traitement biochimique doté d'un mécanisme de transport liquide

(30) Priority: 04.10.2005 JP 2005291395; 31.07.2006 JP 2006208662
(43) Date of publication of application: 11.04.2007
(73) Proprietor: CANON KABUSHIKI KAISHA, Ohta-ku Tokyo 146-8501 (JP)
(72) Inventor: Sugiyama, Takahiro, Tokyo 146-8501 (JP); Araki, Yoshimasa, Tokyo 146-8501 (JP)
(74) Representative: TBK

(56) References cited:
- EP-A1- 1 431 390
- EP-A2- 0 185 330
- US-A- 5 455 008
- US-A1- 2002 028 926
- US-A1- 2005 136 534

## Description

### BACKGROUND OF THE INVENTION

### Field of the Invention

The present invention relates to a biochemical processing apparatus such as a nucleic acid sample testing apparatus. More specifically, the present invention relates to a biochemical processing apparatus adapted for dispensing solutions containing identical samples more than one time for carrying out an examination including or involving multiple reaction steps.

### Description of the Related Art

In recent years, gene analyses using testing pieces, such as microarrays and DNA chips, have been carried out. In those kinds of the gene analyses, a DNA chip is brought into contact with a sample containing a DNA or the like labeled with a fluorescent dye or the like under hybridization conditions. Here, the term "DNA chip" refers to a plurality of DNA probes disposed and fixed as probe spots in a matrix form on a surface of a substrate such as a slide glass or a silicon substrate. When both the detector (i.e., DNA chip) and the sample contain nucleic acids to be hybridized with each other, a labeling substance can be fixed on the detector through a probe nucleic acid. The type of the hybridized nucleic acid can be specified by detecting where on the detector the labeling substance is present.

DNA microarrays utilizing such a hybridization reaction have been expected to be applied to medical diagnoses for specifying pathogens and gene diagnoses for examining constitutions or the like of patients.

As with a nucleic acid sample testing apparatus, in any apparatus that handles a liquid such as a sample or a reagent, a pipette is typically employed to handle the liquid. The pipette to be used is typically of a type in which a pipette chip is mounted on the tip of a syringe. In this case, for preventing contamination, disposable pipette chips have been used in general. More specifically, one pipette chip is used for one kind of liquid and then discarded after use. For reducing the number of pipette chips to be discarded, for example, washing of pipette chips (Japanese Patent Application Laid-Open No. H05-307043) and a device for temporarily placing pipette chips in a pipette-chip housing case (Japanese Patent Application Laid-Open No. H09-096643) have been proposed.

For analyzing a DNA probe, a small amount of a DNA is handled, so attention should be paid on the accuracy of a liquid volume, contamination, and so on. In addition, there is a problem, as described above, in that the use of disposable chips leads to an increase in the number thereof to be discarded. Furthermore, for the gene examination, a plurality of different processing steps, including extraction, amplification, hybridization, and detection of a DNA, should be carried out, while the plurality of steps should be simultaneously carried out in parallel to allow the analysis to be quickly carried out in large amounts.

EP 1431390 A1 discloses a nucleic acid purifying apparatus 100 comprising an operating plane which comprises a specimen rack for holding a plurality of specimen containers, container racks for holding a plurality of processing containers, a container storage rack for holding a plurality of purified product containers, tip racks for holding a plurality of dispensing tips, a tip rack for holding a plurality of nucleic acid capturing tips, a tip rack for holding a plurality of reagent dispensing tips, a plurality of reagent bottles, tip detachers, nucleic acid capturing tips and reagent dispensing tips, a liquid reservoir portion for the disposal of unwanted solution, and a washing portion for washing the dispensing tips and the nucleic acid capturing tips.

EP 0185330 A2 discloses a multi-sample liquid handling system. The system includes a table for supporting one or more multi-well trays and a vertically shiftable head assembly mounted above the table and carrying a row of fixed-position pipettes for dispensing assay liquid simultaneously into a row of wells in a tray. Also included in the system is a rotatable sample holder. A sample-transfer pipette mounted on the head assembly is shiftable in a side-to-side direction for transferring successive samples in the holder to each of a group of wells in a row of a tray.

US 5455008 A discloses a robotic system for performing nucleic acid sequencing reactions in microtiter plate format. The robot has heating blocks to incubate the reactions at appropriate temperatures above ambient temperature, storage for boxes of micropipet tips and software for controlling the operation of the robot during pipetting.

US 2005-136534 A1 relates to the field of microarrayers, which are devices for autonomously depositing minute droplets of biological or chemical fluid samples in ordered arrays onto substrates.

### SUMMARY OF THE INVENTION

An object of the present invention is to provide a biochemical processing apparatus, which is capable of reducing the number of pipette chips to be used.

The biochemical processing apparatus of the present invention is defined according to claim 1.

Further features of the present invention will become apparent from the following description of exemplary embodiments with reference to the attached drawings.

### BRIEF DESCRIPTION OF THE DRAWINGS

FIG. 1 is a front view of a biochemical processing apparatus of the present invention.

FIG. 2 is a top view of a biochemical processing apparatus of the present invention.

FIG. 3 is a right side view of a biochemical processing apparatus of the present invention.

FIG. 4 is a cross-sectional view of the biochemical processing apparatus taken along the dashed line 4-4 of FIG. 2.

FIG. 5 is a cross-sectional view of the biochemical processing apparatus taken along the dashed line 5-5 of FIG. 1.

FIG. 6 is a flowchart for illustrating an example of processing procedures carried out by a biochemical processing apparatus of the present invention.

FIG. 7 is a flowchart for illustrating another example of processing procedures carried out by a biochemical processing apparatus of the present invention.

FIG. 8A and FIG. 8B are cross-sectional views each for representing an example of a pipette chip storage portion with which a biochemical processing apparatus of the present invention is provided.

### DESCRIPTION OF THE EMBODIMENTS

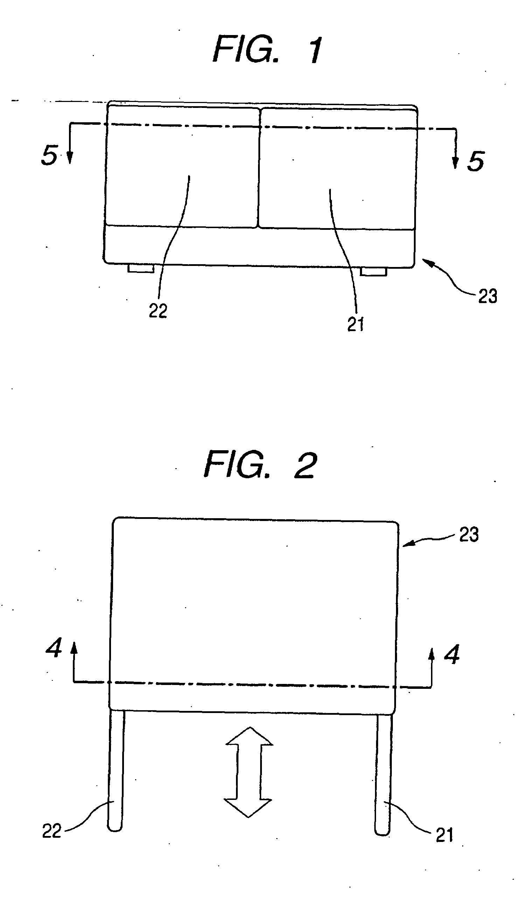

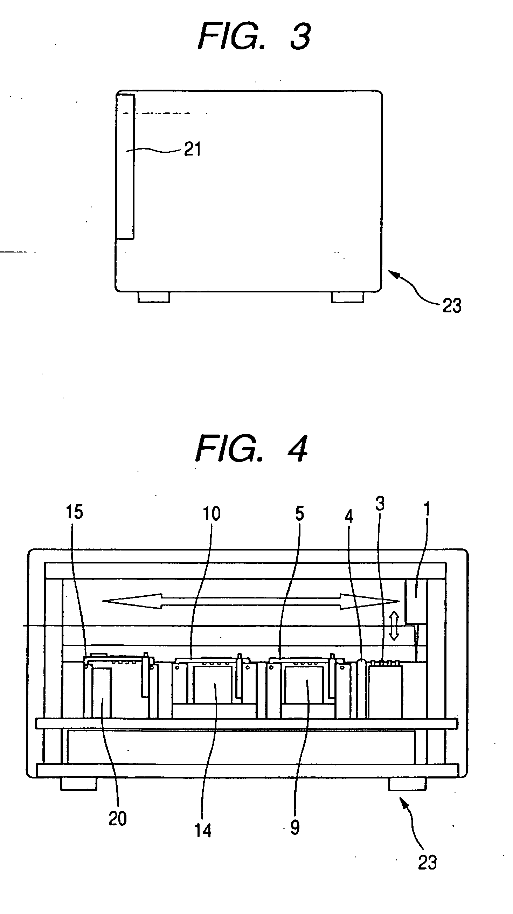

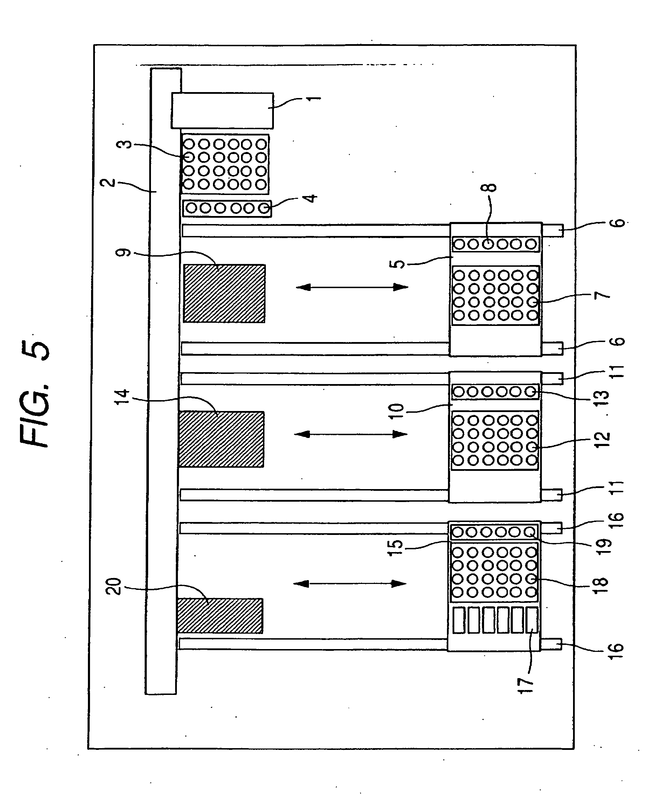

FIG. 1 is a front view of a biochemical processing apparatus in accordance with an embodiment of the present invention. Here, this embodiment will be described exemplifying a nucleic acid sample testing apparatus. Both a right door 21 and a left door 22 provided on the front of the nucleic acid sample testing apparatus 23 are opened and a well plate or the like is then placed on an installation site in the apparatus. FIG. 2 is a first top view of the nucleic acid sample testing apparatus of the present invention. In the figure, the right and left doors 21 and 22 are being opened. FIG. 3 is a right side view of the nucleic acid sample testing apparatus of the present invention. FIG. 4 is a cross-sectional view of the nucleic acid sample testing apparatus taken along the dashed line 4-4 of FIG. 2. FIG. 5 is a cross-sectional view of the nucleic acid sample testing apparatus taken along the dashed line 5-5 of FIG. 1.

A pipette 1 for handling a liquid such as a sample or a reagent is connected to a pipette guide 2 for allowing the pipette 1 to move back and forward in a left-to-right direction in FIG. 5 with respect to the surface of the drawing sheet. In addition, within a range of movement of the pipette 1, a pipette chip storage space 3 for placing an unused pipette chip thereon and a sample storage space 4 are provided. A first step section (i.e., first reaction area) is provided adjacent to both the pipette chip storage space 3 and the sample storage space 4. The first step section includes a transport carrier 5, which can move in a direction perpendicular to a direction along which the pipette 1 moves, and a transport guide 6 for guiding the movement of the transport carrier 5. In addition, on the transport carrier 5, a reagent container 7 and a pipette chip storage space 8 are arranged. Furthermore, within a range of movement of the transport carrier 5, a processing section 9 is provided.

A second step section (i.e., second reaction area) is provided adjacent to the first step section. The second step section has the same principal configuration as that of the first step section. The second step section includes a transport carrier 10 and a transport guide 11. On the transport carrier 10, a reagent container 12 and a pipette chip storage space 13 are arranged. In addition, within a range of movement of the transport carrier 10, a processing section 14 is provided. A third step section (i.e., third reaction area) is provided adjacent to the second step section. The third step section has the same principal configuration as that of the second step section. The third step section includes a transport carrier 15 and a transport guide 16. On the transport carrier 15, a DNA microarray 17, a reagent container 18, and a pipette chip storage space 19 are arranged. Furthermore, within a range of movement of the transport carrier 10, a processing section 20 is provided.

In the above configuration of the apparatus, processing in the first step is initiated after a sample is placed in the sample storage space 4, an unused pipette chip is placed in the pipette chip storage space 3, a pipette chip is placed in the pipette chip storage space 8 of the transport carrier 5, and a reagent is placed in the reagent container 7. Note that, the phrase "a reagent is placed in the reagent container 7" refers to both the case of supplying the reagent into the reagent container 7 on the transport carrier 5 and the case of mounting the reagent container 7, in which the reagent is previously supplied, on the transport carrier 5.

Properly, the conditions for initiating the processing are not limited to those described above. For instance, the processing may be configured such that it can not be initiated before the pipette chip storage spaces 13 and 19 and the reagent containers 12 and 18 of the transport carriers 10 and 15 are provided with chips and reagents, respectively, while the DNA microarray 17 is arranged in the predetermined DNA microarray storage space.

First, for carrying out the processing in the first step, the transfer carrier 5 is moved to the processing section 9. Next, the pipette 1 is prepared such that an unused pipette chip is attached on the pipette 1 in the pipette chip storage space 3 and then used to suck the sample in the sample storage space 4. Subsequently, the pipette 1 moves to the position of the processing section 9, where the pipette 1 discharges the sample into the reagent container 7. After that, a predetermined processing is carried out in the processing section 9, thereby completing the processing in the first step. Here, the phrase "the processing in the first step" refers to, for example, the processing for extraction and purification, where the first step includes mixing and stirring of the reagent. After completion of the processing for extraction and purification, a DNA extracted from the sample is set to a place in the reagent container 7.

Next, for carrying out the processing in the second step, the transfer carrier 10 is moved to the processing section 14. On the other hand, the pipette 1 sucks the product of the first-step processing from the reagent container 7 and then discharges the product into the reagent container 12. Subsequently, a predetermined processing is carried out in the reagent container 12, thereby completing the processing in the second step. Here, the phrase "the processing in the second step" refers to, for example, an amplification processing, which includes steps of mixing and stirring of the reagent, and regulating temperature. After completion of the amplification processing, an amplified DNA is set to a place in the reagent container 12.

Next, for carrying out the processing in the third step, the transfer carrier 15 is moved to the processing section 20. On the other hand, the pipette 1 sucks the product of the second-step processing from the reagent container 12 and then discharges the product into the regent container 18. Subsequently, in the reagent container 18, the product is mixed and stirred with the reagent, thereby preparing a mixture thereof. Then, the mixture is set in a place on a DNA microarray 17, while the processing section 20 regulates temperature, to carry out the processing in the third step. Here, the phrase "the processing in the third step" refers to, for example, hybridization. The DNA microarray 17 may be designed to reserve the mixture solution on a DNA probe to allow a hybridization reaction. For instance, the DNA microarray 17 may have a cover over the DNA microarray, or may be designed to have a cartridge structure in which an inlet, a flow channel, a chamber, and an outlet for the liquid are formed.

After completion of the processing in the third step, a detecting section (not shown) detects results of the reaction on the DNA microarray 17. The detecting section may be arranged within the range of movement of the transport carrier 15, or the DNA microarray 17 may be transferred to the detecting section by means of a transport system or the like for a DNA chip (not sown). Alternatively, the present apparatus may be designed such that no detecting section is provided and the reaction results can be thus detected using another detecting device.

The pipette chip storage spaces 8, 13, and 19 arranged in the respective step sections are provided for temporarily retaining chips when the pipettes are not operated during execution of the respective steps. For instance, when two or more steps are simultaneously processed, a pipette chip may be placed in the pipette chip storage space in one step, while another pipette chip may be attached on a pipette in another step where the processing is being executed.

In this embodiment, the pipette chips used are discarded by a method (not shown) after completion of the processing in all steps. In addition, the reagent containers 7, 12, and 18 each are also used as a container for mixing or reaction of the reagent. The reagent containers can be recovered or discarded after completion of the respective steps by any means (not shown).

The pipette chip storage spaces 8, 13, and 19 may also be recovered by any means (not shown). If those pipette chip storage spaces 8, 13, and 19 are not disposable, these pipette chip storage spaces 8, 13, and 19 may be designed to prevent a liquid from being attached on any part of them, or may be designed to enable a replacement of any part contaminated with the liquid with a new one, even when a chip is placed on the pipette chip storage spaces 8, 13, and 19.

Furthermore, in the above embodiment, all reagents may be previously placed in the respective reagent containers and then mounted on the transport carriers. Alternatively, the reagent may be previously stored in the apparatus and then supplied to each of the reagent containers by means of a pipette or the like as required.

Furthermore, the sample storage space may be designed to be used while being placed on the transport carrier.

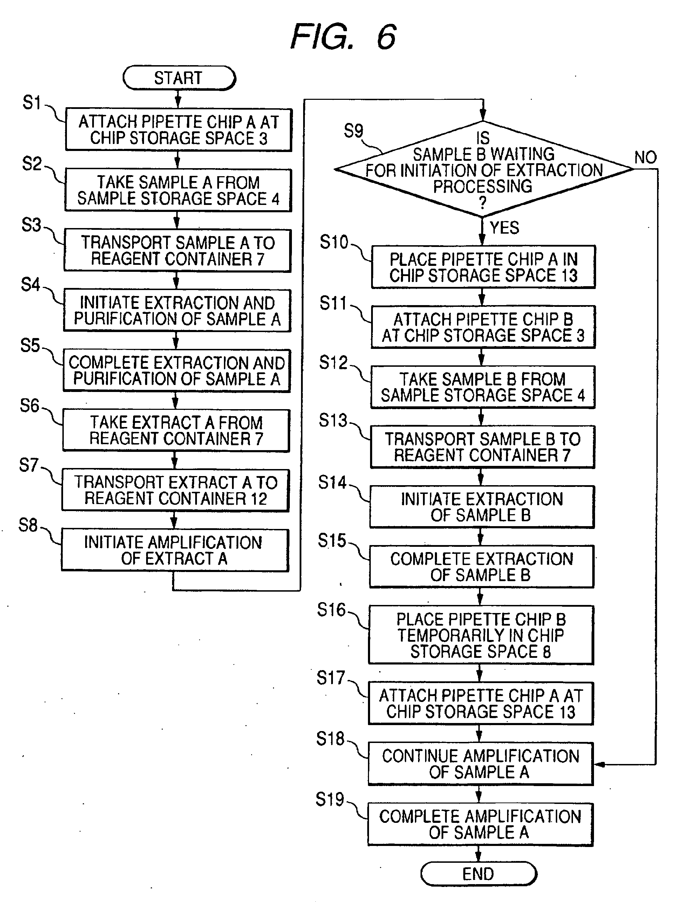

FIG. 6 is a flowchart for explaining the timing of using the pipette chip storage spaces 8 and 13. In other words, it is a flowchart in a case where the duration of the amplification step is longer than the duration of the extraction step.

First, a chip A is attached on a pipette 1 at the pipette chip storage space 3 (Step S1). The pipette 1 takes a sample A from the sample storage space 4 (Step S2) and the taken sample A is then placed in the reagent container 7 (Step S3), followed by initiation of extraction of the sample A (Step S4).

After completion of the extraction of the sample A (Step S5), for preparing for amplification, a sample A extract is taken from the reagent container 7 (Step S6) and then placed in the reagent container 12 (Step S7). After completion of the preparation for amplification, the amplification of the sample A extract is initiated (Step S8). Note that, the used reagent container 7 is discarded after completing the step S6.

After that, a next sample B is subjected to determination whether the sample B is waiting for extraction processing or not (Step S9). When it is determined that the sample B is waiting for the extraction processing, the chip A is placed in the pipette chip storage space 13 (Step S10). Subsequently, a chip B is attached on a pipette 1 at the pipette chip storage space 3 (Step S11) and then the pipette 1 takes the sample B from the sample storage space 4 (Step S12). An unused reagent container 7 is placed in place before the processing proceeds to Step S13, and the sample B is then placed in the reagent container 7 (Step S13), followed by initiation of extraction of the sample B (Step S14). After that, the extraction is completed (Step S15).

After completion of the extraction of the sample B, a chip B is placed in the pipette chip storage space 8 (Step S16). Subsequently, the pipette 1 moves to the pipette chip storage space 13 and the chip A is then attached thereon at the pipette chip storage space 13 (Step S17). The amplification processing being carried out in the reagent carrier 12 further continues (Step S18). After that, the amplification of the sample A is completed (Step S19).

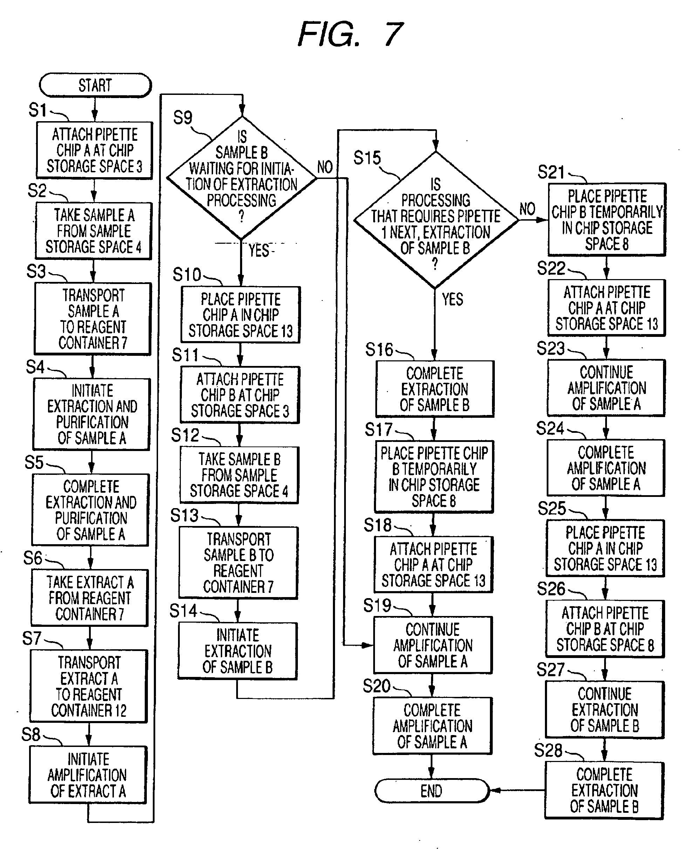

FIG. 7 is a flowchart for explaining the timing of using the pipette chip storage spaces 8 and 13. In other words, it is a flowchart in a case where the apparatus is provided with means for determining time at which the steps of amplification and extraction are completed, respectively.

First, a chip A is attached on a pipette 1 at the pipette chip storage space 3 (Step S1) and a sample A is then taken from the sample storage space 4 (Step S2). Subsequently, the taken sample A is placed in the reagent container 7 (Step S3) to initiate extraction of the sample A (Step S4). After completion of the extraction of the sample A (Step S5), for preparing for amplification, a sample A extract is taken from the reagent container 7 (Step S6), followed by being placed in the reagent container 12 (Step S7). After completion of the preparation for amplification, the amplification of the sample A extract is initiated (Step S8).

Next, it is determined whether the next sample B is waiting for extraction processing or not (Step S9). When it is determined that the sample B is waiting for the processing, the chip A is placed in the pipette chip storage space 13 (Step S10). Subsequently, a chip B is attached on the pipette 1 in the pipette chip storage space 3 (Step S11), and the sample B is then taken from the sample storage space 4 (Step S12). After that, the taken sample B is placed in the reagent container 7 (Step S13), followed by initiation of extraction of the sample B (Step S14).

Then, it is determined which of the sample B extraction and the sample A amplification requires a pipetting operation (Step S15). If the sample B extraction requires the pipetting operation, then the extraction keeps on. After completion of the extraction (Step S16), the chip B is placed in the pipette chip storage space 8 (Step S17). After that, a chip A is attached on the pipette 1 in the pipette chip storage space 13 (Step S18) and the sample A amplification keeps on (Step S19), thereby completing the amplification of the sample A (Step S20).

On the other hand, in Step S15, when it is determined that the pipette is required for the sample A amplification, the processing proceeds to Step S21, where the chip B is placed in the pipette chip storage space 8. After that, a chip A is attached on the pipette 1 in the pipette chip storage space 13 (Step S22) and the sample A amplification keeps on (Step S23). After that, the amplification is completed (Step S24). Subsequently, the chip A is placed in the pipette chip storage space 13 (Step S25), and the chip B is then attached on the pipette 1 in the pipette chip storage space 8 (Step S26). Subsequently, the operation of extracting the sample B keeps on (Step S27). After that, the extraction of the sample B is completed (Step S28).

As shown in the flowchart shown in FIG. 7, the determination of a priority level of the pipette 1 is carried out only one time. However, it should be noted that the determination may be carried out two or more times.

As described above, in FIG. 6, the flow of simultaneously processing of both the first and second steps has been exemplified. However, for example, the simultaneous processing of three steps or the simultaneous processing of the first and third steps may be carried out by the same procedures as described above. The chips in use may be optionally placed in the pipette chip storage spaces 8, 13, and 19 in the respective steps, while the pipette 1 is allowed to sequentially shift its position to carry out parallel processing.

By employing the configuration as described above, two or more steps can be simultaneously processed in an efficient manner while permitting reduction in the number of chips to be discarded, without consideration of contamination. Therefore, such the configuration of the nucleic acid sample testing apparatus is extremely useful.

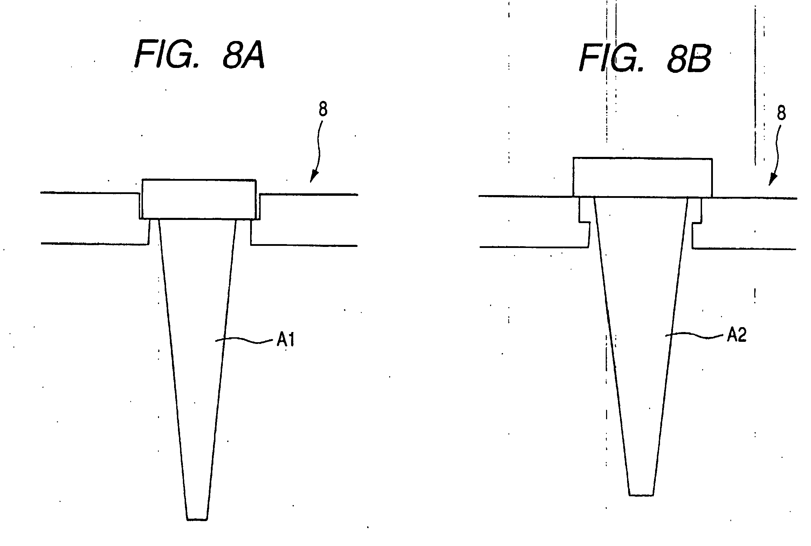

FIG. 8A and FIG. 8B each represent an example of the pipette chip storage space 8. FIG. 8A shows a state in which a chip A1 having a small volume is placed in the pipette chip storage space 8, while FIG. 8B shows a state in which a chip A2 having a large volume is placed in the pipette chip storage space 8. In a case where a nucleic acid sample testing apparatus has two or more types of reaction steps, the amount of a liquid to be handled in each step may significantly vary, for example, in the range of several microliters to several hundred microliters. In this case, for keeping accuracy in the amount of a liquid to be dispensed, it is necessary to appropriately use two or more types of pipette chips depending on the amounts of the liquid. Thus, it is extremely useful that two or more kinds of chips can be placed in one pipette chip storage space.

The specific examples of the pipette chip storage space 8 have been represented in FIG. 8A and FIG. 8B, respectively. It is noted that other pipette chip storage spaces 3, 13, and 19 each represented in FIG. 5 may be designed to have a similar configuration.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
A biochemical processing apparatus includes a plurality of reaction areas of different types, a pipette (1) for dispensing a liquid, a pipette chip removably attachable on the pipette, and pipette chip storage spaces (3, 8, 13, 19) each capable of holding the pipette chip. The pipette chip storage spaces are provided in the plurality of reaction areas.

## Claims

1. A biochemical processing apparatus, comprising:
a plurality of reaction areas of different types;
a pipette (1) for dispensing a liquid; ; and
a pipette chip removably attachable onto the pipette (1), **characterized in that**
each of the plurality of reaction areas comprises a pipette chip storage space (8, 13, 19) capable of holding the pipette chip, a reagent container (7, 12, 18) and a processing section (9, 14, 20),
each of the plurality of reaction areas comprises a transport carrier (5, 10, 15) for moving the reagent container (7, 12, 18) and the pipette chip storage space (8, 13, 19) of said reaction area, and
in each of the plurality of reaction areas, the processing section (9, 14, 20) is provided within a range of movement of the transport carrier (5, 10, 15).

2. A biochemical processing apparatus according to claim 1, wherein a device for transporting both the pipette chip storage space (8, 13, 19) and the reagent container (7, 12, 18) to any one of the plurality of reaction areas is provided for each of the plurality of reaction areas.

3. A biochemical processing apparatus according to claim 2, wherein the plurality of reaction areas allows respective reactions to be simultaneously carried out.

4. A biochemical processing apparatus according to claim 1, wherein the pipette chip is disposable.

5. A biochemical processing apparatus according to claim 1, wherein the pipette chip storage space (8, 13, 19) is disposable.

6. A biochemical processing apparatus according to claim 1, wherein the pipette chip storage space (8, 13, 19) is capable of retaining a plurality of types of the pipette chips.

7. A biochemical processing apparatus according to claim 1, wherein the biochemical processing apparatus comprises a nucleic acid sample testing apparatus.

8. A biochemical processing apparatus according to claim 1, wherein the plurality of reaction areas include an area for nucleic acid amplification and an area for hybridization.

9. A biochemical processing apparatus according to claim 2, wherein the apparatus further comprises a common door for providing an access to each of the installation sites of the reaction areas located proximate to the door in the apparatus.

## Patentansprüche

1. Biochemischer Prozessierungsapparat, der umfasst:
eine Mehrzahl von Reaktionsbereichen verschiedener Arten;
eine Pipette (1) zum Ausgeben einer Flüssigkeit; ; und
eine Pipettenspitze, die abnehmbar auf die Pipette (1) anbringbar ist, **dadurch gekennzeichnet, dass**
jede der Mehrzahl von Reaktionsbereichen einen Pipettenspitzenlagerraum (8, 13, 19), der in der Lage ist, die Pipettenspitze zu halten, einen Reaktionsmittelbehälter (7, 12, 18) und einen Prozessierungsabschnitt (9, 14, 20) umfasst,
jede der Mehrzahl von Reaktionsbereichen einen Transportträger (5, 10, 15) zum Bewegen des Reaktionsmittelbehälters (7, 12, 18) und des Pipettenspitzenlagerraums (8, 13, 19) des Reaktionsbereichs umfasst, und
in jeder der Mehrzahl von Reaktionsbereichen der Prozessierungsabschnitt (9, 14, 20) innerhalb des Bewegungsbereichs des Transportträgers (5, 10, 15) vorgesehen ist.

2. Biochemischer Prozessierungsapparat nach Anspruch 1, wobei eine Vorrichtung zum Transportieren sowohl des Pipettenspitzenlagerraums (8, 13, 19) als auch des Reaktionsmittelbehälters (7, 12, 18) zu jeglicher der Mehrzahl von Reaktionsbereichen für jede der Mehrzahl von Reaktionsbereichen vorgesehen ist.

3. Biochemischer Prozessierungsapparat nach Anspruch 2, wobei die Mehrzahl von Reaktionsbereichen es den jeweiligen Reaktionen ermöglicht, gleichzeitig ausgeführt zu werden.

4. Biochemischer Prozessierungsapparat nach Anspruch 1, wobei die Pipettenspitze ein Einwegmaterial ist.

5. Biochemischer Prozessierungsapparat nach Anspruch 1, wobei der Pipettenspitzenlagerraum (8, 13, 19) ein Einwegmaterial ist.

6. Biochemischer Prozessierungsapparat nach Anspruch 1, wobei der Pipettenspitzenlagerraum (8, 13, 19) in der Lage ist, mehrere Arten der Pipettenspitzen zu halten.

7. Biochemischer Prozessierungsapparat nach Anspruch 1, wobei der biochemische Prozessierungsapparat einen Nukleinsäureprobenprüfapparat umfasst.

8. Biochemischer Prozessierungsapparat nach Anspruch 1, wobei die Mehrzahl von Reaktionsbereichen ein Bereich für Nukleinsäureamplifikation und ein Bereich für Hybridisierung beinhaltet.

9. Biochemischer Prozessierungsapparat nach Anspruch 2, wobei der Apparat ferner eine gemeinsame Tür zum Bereitstellen eines Zugangs zu jeder der Installationsstellen der Reaktionsbereiche, die nahe der Tür in dem Apparat verortet sind, umfasst.

## Revendications

1. Appareil de traitement biochimique, comprenant :
une pluralité de zones de réaction de différents types ;
une pipette (1) pour distribuer un liquide ; et
une pointe de pipette fixée de manière amovible sur la pipette (1), **caractérisé en ce que**
chacune de la pluralité de zones de réaction comprend un espace de stockage (8, 13, 19) de pointe de pipette capable de contenir la pointe de pipette, un récipient à réactifs (7, 12, 18) et une section de traitement (9, 14, 20),
chacune de la pluralité de zones de réaction comprend un support de transport (5, 10, 15) pour déplacer le récipient à réactifs (7, 12, 18) et l'espace de stockage (8, 13, 19) de pointe de pipette de ladite zone de réaction, et
dans chacune de la pluralité de zones de réaction, la section de traitement (9, 14, 20) est prévue dans une plage de déplacement du support de transport (5, 10, 15).

2. Appareil de traitement biochimique selon la revendication 1, dans lequel un dispositif permettant de transporter à la fois l'espace de stockage (8, 13, 19) de pointe de pipette et le récipient à réactifs (7, 12, 18) vers l'une quelconque de la pluralité de zones de réaction est prévu pour chacune de la pluralité de zones de réaction.

3. Appareil de traitement biochimique selon la revendication 2, dans lequel la pluralité de zones de réaction permet à des réactions respectives d'être effectuées simultanément.

4. Appareil de traitement biochimique selon la revendication 1, dans lequel la pointe de pipette est jetable.

5. Appareil de traitement biochimique selon la revendication 1, dans lequel l'espace de stockage (8, 13, 19) de pointe de pipette est jetable.

6. Appareil de traitement biochimique selon la revendication 1, dans lequel l'espace de stockage (8, 13, 19) de pointe de pipette est capable de retenir une pluralité de types de pointes de pipette.

7. Appareil de traitement biochimique selon la revendication 1, dans lequel l'appareil de traitement biochimique comprend un appareil d'analyse d'échantillon d'acide nucléique.

8. Appareil de traitement biochimique selon la revendication 1, dans lequel la pluralité de zones de réaction comportent une zone pour l'amplification d'acide nucléique et une zone pour l'hybridation.

9. Appareil de traitement biochimique selon la revendication 2, dans lequel l'appareil comprend en outre une porte commune pour fournir un accès à chacun des sites d'installation des zones de réaction situés à proximité de la porte dans l'appareil.
